# EUROPEAN PATENT SPECIFICATION

(11) **EP 2 404 077 B1**
(45) Date of publication and mention of the grant of the patent: **21.05.2014**
(21) Application number: 10714389.3
(22) Date of filing: 02.03.2010
(51) Int. Cl.: F16F 9/46, F16F 9/06, F16F 9/348, F16F 9/48

(54) **SHOCK ABSORBER WITH DUAL PISTON WITH REDUCED DAMPING IN INITIAL PART OF THE STROKE**
ZWEIKOLBENSTOSSDÄMPFER MIT REDUZIERTEN DÄMPFUNG IM ERSTEN TEIL DES DÄMPFERHUBES
AMORTISSEUR A DOUBLE PISTON AVEC RÉDUCTION DE L'AMORTISSEMENT EN PARTIE INITIALE DE LA COURSE

(30) Priority: 03.03.2009 SE 0900273
(43) Date of publication of application: 11.01.2012
(73) Proprietor: ÖHLINS RACING AB, 194 27 Upplands Väsby (SE)
(72) Inventor: DANEK, Magnus, S-141 38 Huddinge (SE); JARL, Johan, S-113 33 Stockholm (SE)
(74) Representative: Engdahl, Stefan
(86) International application number: PCT/SE2010/050243
(87) International publication number: WO 2010/101521

(56) References cited:
- EP-A1- 0 748 950
- EP-A1- 1 006 292
- EP-A1- 1 688 339
- WO-A1-2009/082339
- US-A- 3 447 644
- US-A- 6 089 142

## Description

### Technical field

The invention relates to a shock absorber, in which compression and return damping is realized with double pistons and in which pressurization of the absorber is realized between the pistons.

### Background of the invention

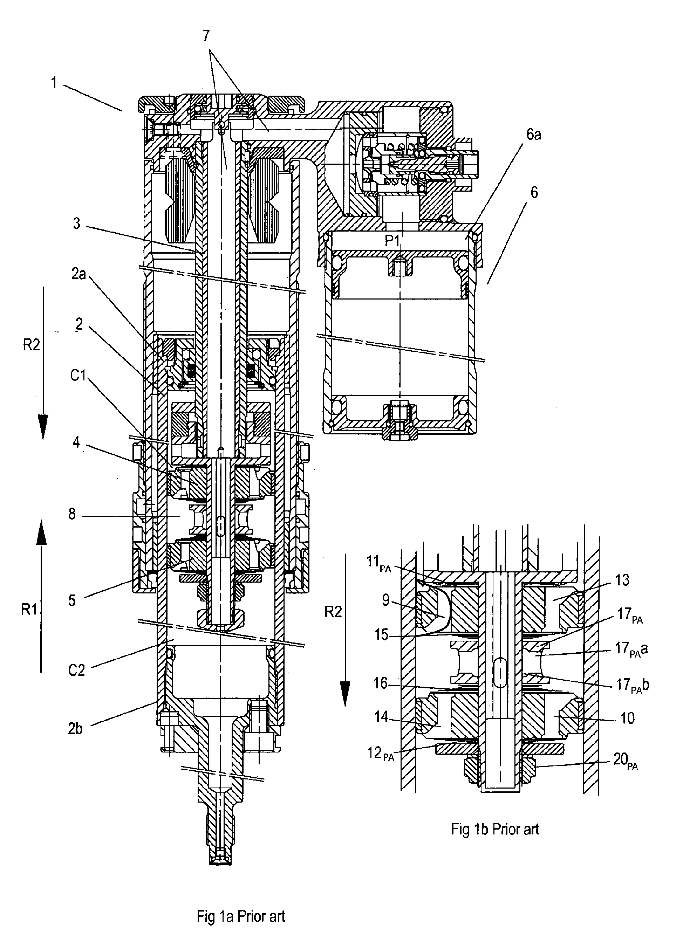

The Applicant produces a shock absorber 1, see figures 1 and 1a, comprising a damping medium-filled cylinder body 2, which is delimited at the ends and divided into a first C1 and a second C2 damping chamber by a main piston assembly made up of two main pistons 4, 5. The first one of the damping chambers C1 can also be referred to as a return chamber and the second one of the damping chambers C2 can be referred to as a compression chamber.

The main pistons 4, 5 are mounted on a hollow piston rod 3, which extends through one of the ends 2a of the cylinder body. Through the piston rod 3, damping medium flows between a pressurized chamber 6a into a pressurization reservoir 6 and the respective damping chamber C1, C2. The pressurized damping medium is led from the pressurization reservoir 6 via a duct 7 in the piston rod 3 to an interspace 8 between the main pistons 4, 5 and onward via continuous pressurization ducts 9, 10 extending through the main pistons 4, 5 and delimited by first flow limiters 11, 12, in order finally to be led out into the respective damping chamber C1, C2. The second one of the main pistons 5 dampens movement substantially in a first direction R1, i.e. the compression direction, where the cylinder body moves relative to the main piston assembly such that the shock absorber length decreases, and the first one of the main pistons 4 dampens movement substantially in the second direction R2, i.e. the return direction, where the main piston assembly moves such that the shock absorber length increases. The damping is realized through deformation of a second flow limiter formed by a set of flexible first washers 15, 16, which delimit the main flow ducts 13, 14 extending through the main pistons. By virtue of this design, it is possible to ensure that a pressure significantly greater than zero always prevails in the damping chambers. This is because the pressure in the damping chambers C1 and C2 is only marginally lower than the pressure P1, owing to the slight pressure drop across the flow limiters 11 and 12, respectively, and the fact that the interspace 8 common to both chambers is also pressurized at the same pressure. The pressurized damping medium is led out into the respective damping chamber C1, C2 via a set of flexible second washers 11_{PA}, 12_{PA}, i.e. shims. The flexible second washers are fixed in place by their inner diameter such that they flex around their central part and let through a damping medium flow only via their outer part, which diverges from the first side of the main piston and therefore leaves an opening area which is disposed on the outer diameter of the second washers, see figure 1 b. In order to achieve minimal flow resistance in the direction out from the interspace, the sets of flexible washers have been chosen to be as soft as possible such that they can open with just a very small pressure difference between the respective damping chamber and the interspace.

Problems have then arisen, since very soft washers easily become unstable and start to deform unpredictably with the flow. The dynamics of the whole absorber are in this case impaired and unexpected vibrations and noise can arise.

Moreover, it is desirable to be able to separate the compression and return dynamics such that different damping characteristics can be obtained in the different damping directions. A further problem has been to provide a shock absorber which, in the initial part of the respective stroke, without delay enables a flow between the damping chambers without affecting the damping properties in the other direction of stroke.

### Object of the invention

The present invention sets out to solve the dynamics problems which arise in a shock absorber which is pressurized via a space between a main piston assembly consisting of two main pistons.

In addition, the invention aims to solve problems involving the separation of the damping properties of the shock absorber during the return and compression strokes, respectively. Furthermore, the invention provides for a desirable initial rapid opening of the valves without impairing the ability of the shock absorber to control the movements of the chassis.

Finally, these problems must be solved in an economical and simple manner.

### Summary of the invention

The invention relates to a shock absorber according to the preamble of claim 1. The invention is characterised in that at least the first check valve and/or the second check valve is/are disposed on the respective main piston in such a manner that it/they, in the initial part of the return stroke and/or the compression stroke, enable(s) a flow between the respective damping chamber and the interspace during the first part of the respective stroke. Thus, during the first part of the return stroke, a flow is enabled between the first damping chamber and the interspace and/or, during the first part of the compression stroke, a flow is enabled between the second damping chamber and the interspace. Owing to this design of the first flow limiters which serve as check valves, the properties of the damper during the return stroke can be separated from the properties of the damper during the compression stroke. By enabling an initial flow between the first and the second chamber during the return stroke, the desirable damping properties which, for example, result in a rapid rebound or spring back of the wheel are obtained.

In a first embodiment of the shock absorber, the first check valve is arranged at a distance from the first surface of the first main piston such that, in the initial part of the return stroke, a damping medium flow is able to flow in a gap between the first check valve and the first main piston.

In a second embodiment, the second check valve is arranged at a distance from the first surface of the second main piston such that a damping medium flow is able to flow in a gap between the second check valve and the second main piston during the first part of the compression stroke.

The distance between the first check valve and/or the second check valve and the first surface of the respective main piston is created by the first and/or the second check valve being arranged to bear, at its inner edge portion, against a spacer supported on the first surface of the main piston. The spacer has a thickness of between 0.1 and 0.6 mm, preferably 0.3 mm.

In a preferred embodiment, the spacer has the form of an annular sealing washer. The spacer can also be provided in the form of an axially projecting part which extends from the first surface of one or both of the main pistons.

In a further embodiment, the spacer is created by the first and/or the second check valve being formed with an axially projecting part which serves to support it on the first surface of the first or the second main piston.

To create the flow path which is open only initially between the first check valve and/or the second check valve and the respective main piston, the check valve or valves is/are arranged such that at a certain flow, when the pressure difference across the respective check valve has reached a predetermined value determined by the piston velocity of the main piston assembly, said check valve is deformed. The deformation causes the outer edge portion of the check valve or valves to be moved in parallel relative to the inner edge portion such that the outer edge portion bears in a sealing manner against the first surface of the respective main piston.

Preferably, the flow path between the first check valve and the first main piston closes at a flow corresponding to a main piston assembly velocity of between 1 and 2 m/s.

In a second embodiment of the invention, the second check valve is rigid and inflexible in the axial direction and has a certain extent in the lateral direction. A second check valve, which is rigid in the axial direction, lifts axially from the second main piston with substantially maintained external shape in the opening process, where a damping medium flow is flowing in the return direction between the interspace and the first damping chamber. This contributes to a shock absorber with stable dynamics and consistent damping characteristics.

The invention will be described in greater detail below, reference being made to the accompanying drawings.

### List of figures

Fig. 1a shows a shock absorber according to the prior art.
Fig. 1b shows an enlarged view of the piston portion in the prior art.
Fig. 2a shows the shock absorber according to the invention.
Fig. 2b shows an enlarged view of the piston portion in the shock absorber according to the invention.
Fig. 3a shows the second check valve with its alternative embodiments.
Fig. 3b shows the second main piston with a section through the centre of the piston.
Fig. 3c shows a view of that side of the main piston which is directed toward the damping chambers.
Fig. 4a shows a sectional view of the first main piston with the first check valve in the open position.
Fig. 4b shows a sectional view of the first main piston with the first check valve in the closed position.
Fig. 4c shows the first check valve according to a second embodiment.
Fig. 5 shows the force absorption during a compression and a return stroke,
respectively.
Fig. 6a shows a second embodiment of the main piston assembly according to the invention.
Fig. 6b shows a third embodiment of the main piston assembly according to the invention.
Fig. 7a is an enlarged view of the intermediate part.
Fig. 7b shows the intermediate part with a section through its radially projecting supporting part.
Fig. 7c shows a three-dimensional view of the intermediate part.

### Detailed description of the invention

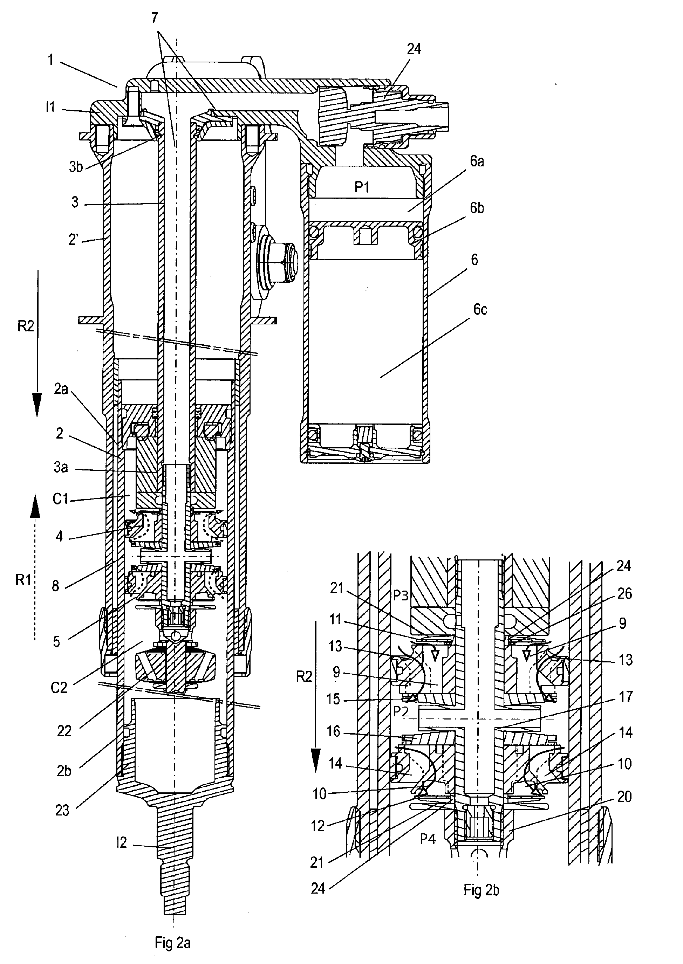

The shock absorber 1 according to the invention, see figures 2a and 2b, has a basic construction corresponding to the prior art shown in figure 1. The shock absorber thus comprises a damping cylinder body 2, which is filled with a damping medium and delimited at the ends 2a, 2b and which is divided into a first C1 and a second C2 damping chamber by a main piston assembly made up of a first and a second main piston 4, 5. The damping medium is preferably hydraulic oil, which can contain associated additives in a manner which is known per se. Alternatively, glycol and/or water can be used as the fluid. The damping cylinder body 2 is preferably also telescopically disposed in a second cylinder 2'.

The main pistons 4, 5 are mounted on a first end 3a of a hollow piston rod 3, which extends through one of the ends 2a of the cylinder body and which moves with the second cylinder 2'. Through the piston rod 3, damping medium flows between a pressurized chamber 6a of a pressurization reservoir 6 and the respective damping chamber C1, C2. In the pressurization reservoir 6 there is disposed a pressurizing member 6b in the form of a piston, rubber bladder or the like. The pressurization reservoir encloses a first pressurized and damping-medium-filled chamber 6a. The pressurization reservoir is delimited by the pressurizing member 6b also in a second space 6c, which comprises a second medium more compressible than the damping medium. The compressible medium can be constituted by gas, for example air, nitrogen gas or other gas with additives. By filling of compressible medium into the second space, the basic pressure P1 is created, which pressurizes the damping medium. The compressible medium can also be replaced by a mechanical member, such as a spring or the like.

Pressurization of the absorber, and also the damping characteristics of the absorber, is adjusted by one or more valves 18 according to the prior art, which is/are arranged to adjust the damping medium flow between the pressurization reservoir 6 and the inner volume of the damping cylinder part 2.

The pressurized damping medium is led from the pressurization reservoir 6 via a duct 7 in the piston rod 3 to an interspace 8 between the main pistons 4, 5. This interspace 8 then acquires the pressure P2, which is substantially equal to the basic pressure P1. The damping medium can then flow onward via continuous pressurization ducts 9, 10 in the main pistons 4, 5 out into the respective damping chamber C1, C2, so that the damping chambers too acquire at least the pressure P1=P2 (with possible pressure changes due to the pressure drop across the flow limiters). First flow limiters 11, 12 bears against a first side 4a, 5a of the main pistons 4, 5, during the latter part of the return and compression strokes, respectively, and act as check valves which prevent flow through the pressurization duct 9, 10 in the direction away from one of the damping chambers C1, C2 to the interspace 8. Instead, the damping medium flow is forced from the first and the second damping chamber, respectively, to the interspace 8 via main flow ducts 13, 14 extending through the main pistons 4, 5. The first flow limiters 11, 12 include a first check valve 11, which during most of the return stroke R2 prevents flow from the first damping chamber C1 via the pressurization duct 9 to the interspace 8 and a second check valve 12 which prevents flow from the second damping chamber C2, via the pressurization duct 10, to the interspace 8.

The second one 5 of the main pistons dampens movement substantially in a first direction R1, i.e. the compression direction, where the cylinder body moves in such a manner that the shock absorber length decreases and the pressure P4 in the second damping chamber C2 increases, and the first one of the main pistons 4 dampens movement substantially in a second direction R2, i.e. the return direction, where the main piston assembly moves such that the shock absorber length increases and the pressure P3 in the first damping chamber C1 increases. The main damping is realized through deformation of second flow limiters 15, 16, preferably a set of flexible first washers 15, 16, which delimit the main flow ducts 13, 14 extending through the main piston and which bear against a second main piston side 4b, 5b.

In figure 2b, it is shows how the damping medium flows during the return stroke between the first C1 and the second damping chamber C2 via the main flow ducts 13 of the first main piston 4, through the interspace 8 and out through the pressurization ducts 10 of the second main piston 5. A certain initial flow also passes through a gap formed between the first surface 4a of the first piston 4 and the first check valve 11.

During the compression stroke R1, the damping medium flows from the second damping chamber C2 to the first damping chamber C1 via the main flow ducts 14 of the second piston 5, through the interspace 8 and out through the pressurization ducts 9 of the first main piston 4. See dashed arrows in figure 2a. In this embodiment, the second check valve 12 bears against the first side 5a of the second main piston during the whole stroke, which means that no flow passes through the pressurization ducts 10 of the main piston 5.

The second piston rod end 3b is fixed in a first fastening member I1, which is connected to the second cylinder 2' arranged concentrically around the damping cylinder part 2. The second cylinder 2' is fastened to a part of a particular vehicle which moves with the ground surface, preferably a wheel or runner. The other end 2b of the damping cylinder has a second fastening member 12, which can be fixed in a chassis or frame part of a particular vehicle. Of course, the opposite fitting direction is also possible.

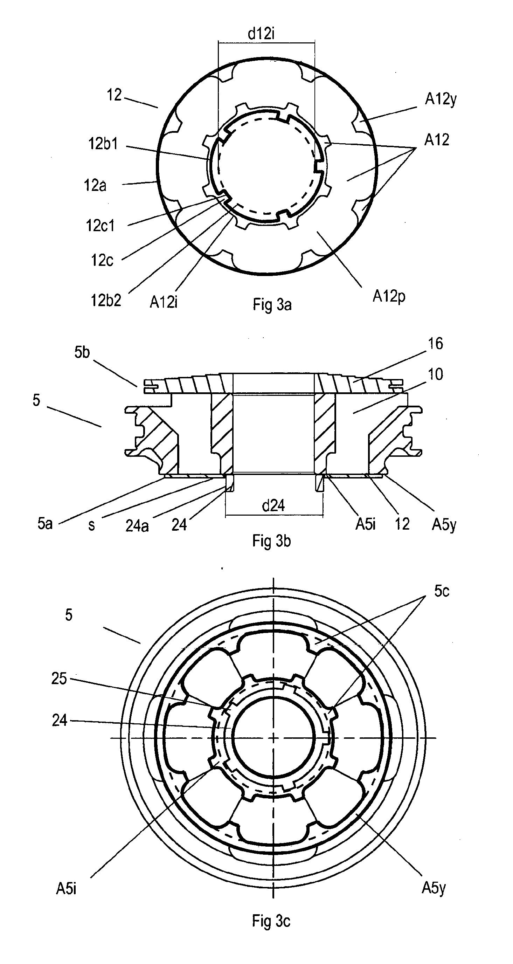

In a first embodiment of the invention, the second check valve 12 is rigid, substantially inflexible in the axial direction and has the form of one or more sealing washers having a certain extent both in the radial direction and in the axial direction. In the radial direction, they extend from an inner circular edge 12b2 (see the inner dashed line in figure 3a) to an outer circular edge 11a, 12a, and in the axial direction the sealing washers preferably have a thickness of between 0.2 and 1 mm.

In the first embodiment of the invention, the first check valve 11 too has preferably the form of a circular washer. The washer has a thickness of between 0.1 and 0.6 mm, preferably 0.3 mm. When a sufficient force is applied on the washer creating a moment around its inner edge 11 b, it can flex in the axial direction.

In figure 2b, it is shown that the second check valve 12 lifts from the main piston 5 with substantially maintained external shape in the opening process, where a damping medium flow is created by the fact that the pressure P2 in the interspace 8 is greater than the pressure P4 in the damping chamber C2. The second check valve 12 lifts from the first side 5a of the second main piston 5 substantially parallel with the piston rod 3 in relation to a spacer sleeve 24 disposed on that surface of the second main piston 5 which faces the damping chambers, inside the inner edge 12b1, 12b2 of the flow limiter. A spacer sleeve 24 can also be provided on the first main piston 4.

In figure 3a is shown the second check valve 12, which, on its inner edge, has radially inwardly extending lugs 12c. The lugs 12c extend in the radial direction from an inner lug edge 12b1 to an outer lug edge 12c1. The outer lug edge 12c1 substantially coincides with the inner diameter d12i of the second check valve 12 and is designed to center the second check valve 12 on the spacer sleeve 24. When the second check valve 12 has opened and lifted from the second main piston 5, the damping medium can flow in the space between the lugs 12c.

In figure 3b, the second main piston 5 is shown with a closed valve when there is no damping medium flowing in the pressurization duct 10 and when the pressure P4 in the damping chamber C2 is greater than or equal to the pressure P2 in the intermediate chamber 8. The second check valve 12 then rests on an inner A5i and an outer bearing surface A5y of the first side 5a of the main piston and covers the continuous pressurization ducts 10. The inner edge of the second check valve 12 has an inner diameter d12i, which is somewhat greater than the outer radial extent d24 of the spacer sleeve. A gap s is thus created between the inner edge 12b1, 12b2 of the second check valve 12 and the space sleeve 24. In this gap s, the damping medium can flow with a certain restriction proportional to the size of the gap.

To enable the pressurized damping medium to flow, during the return stroke R2, substantially without resistance through the pressurization duct 10, the second check valve 12 is configured such that the damping medium acts on the largest possible pressure area A12p of the second check valve 12. The pressure area Al2p corresponds substantially to the total area A12 of the second check valve 12. The pressure area A12p of the second check valve 12 is defined by the radially spanning area which is formed between the inner A5i and the outer first bearing surface A5y disposed on the first side 5a of the second main piston 5. Preferably, the pressure area covers between 85 and 90% of the total area A12 of the second check valve 12.

The low flow resistance is created by the pressurization ducts being made large with low flow resistance and by the first damping medium flow acting on a large pressure area of the second check valve 12, and by the latter being able with small force to open to a large opening area.

In figure 3c, the main piston 5 is shown with its inner A5i and outer first bearing surface A5y. The second main piston 5 is here configured such that the second check valve 12 bears against stud-shaped supporting points 5c. By virtue of this embodiment, the second check valve 12 receives sufficient support from the main piston, but produces a minimal holding effect in the opening process due to the reduced sealing surface. In this figure, an embodiment of the invention is also shown where centering of the second check valve 12 is realized by the arrangement of radially projecting lugs 25 in the spacer sleeve 24.

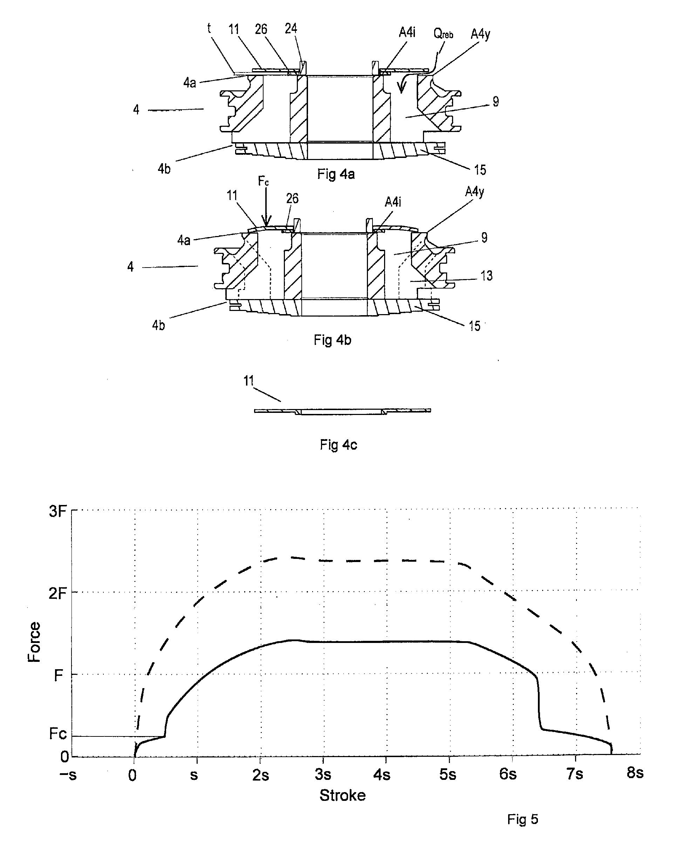

In figure 4a is shown an enlarged view of the first main piston 4 with its first check valve 11. The first check valve 11 rests, at its inner edge portion 11b, on a spacer 26, preferably in the form of an additional circular washer.

The washer may, of course, be of shapes other than circular. The washer may also be replaced by an axially projecting part which is integrally formed with the first main piston 4 and extends from the first surface 4a thereof. In yet another version the first check valve 11 has an axially projecting part which serves to support it on the first surface 4a of the second main piston 4, see Fig. 4c.

By virtue of the fact that the spacer creates a distance between the first check valve 11 and the first surface 4a of the first piston 4, the first check valve 11 is open in the initial part of the return stroke R2. By open is here meant that it enables a flow Q_{reb} between the first damping chamber C1 and the interspace 8 during the first part of the return stroke. While the first check valve 11 is open initially, the second check valve 12 is arranged according to figures 2a and 3b, which means that it stops the flow in the pressurization duct 10 between the second damping chamber C2 and the interspace 8 during the whole compression stroke R1. As a result, the damping properties obtained during the return stroke R2 can be different from those obtained during the compression stroke R1, as is also shown in figure 5.

In figure 4b, the first main piston 4 is shown in a state where a force F_{c}, dependent upon the piston velocity, acts on the first check valve 11 with sufficient leverage to cause it to deform to such a degree that its outer edge portion 11a is moved in parallel relative to the inner edge portion 11 b. At the end position, the outer edge portion 11a of the first check valve 11 bears in a sealing manner against the first surface 4a of the first main piston 4, so that the flow Q_{reb} through the pressurization duct 9 in the direction away from the first damping chamber C1 to the intermediate chamber 8 is completely obstructed.

By enabling a damping medium flow Q_{reb} in the direction from the first C1 to the second damping chamber C2 in the initial part of the return stroke, the desired damping properties which result in a rapid rebound or spring back of the wheel are obtained. It has been demonstrated that a rapid rebound of the wheel considerably improves the road-holding qualities of a four-wheel vehicle by the tire load variations being significantly reduced. This is because the tire will spend less time in the air and more time in contact with the ground surface. Nor is the ability of the shock absorber to control the movements of the chassis impaired, since this rapid rebound movement occurs only during a limited part of the stroke.

In figure 5, a curve is shown which describes the force absorption-damper stroke relation for the first embodiment of the invention. The dashed curve represents the force absorption during the compression stroke R1 and the solid curve represents the force absorption during the return stroke R2. The force absorption during the compression and return strokes is dependent upon the pressure difference across the respective flow limiter 11, 15; 12, 16 arranged on the first or the second main piston 4, 5 and the flow that is forced through these flow limiters as they open.

The solid curve representing the force absorption during the return stroke R2 indicates a significant force increase as the force F reaches the value F_{c}, which is the force required for the first check valve 11 to bend and to seal also against the outer piston surface A4y of the first main piston 4. The pressure difference across the first check valve 11 that generates the force F_{c} occurs at a piston velocity not exceeding 1 m/s. When the first check valve 11 is closed the only way for the damping medium to flow is through the main flow duct 13. As the second check valve 12 is arranged to open without resistance at a flow in the direction from the intermediate chamber 8 to the second damping chamber C2, the force absorption of the damper is determined by the set of washers which delimit the main flow duct 13 and form the second flow limiter 15. Accordingly, in the initial part of the stroke the force absorption curve is determined by the flow resistance created in the gap between the first main piston and the first check valve and, during the remaining part of the stroke, the curve shape is determined by the flow resistance created as the damping medium flows through the opened second flow limiter 15.

The dashed curve representing the force absorption during the compression stroke R1 indicates a constant force increase and decrease with the stroke. This is because the second check valve 12 bears against the first surface 5a of the second main piston 5 during the whole compression stroke R1. As a result, the force absorption during the compression stroke R1 will be dependent only upon the pressure drop across the set of washers which delimit the main flow duct 14 and form the second flow limiter 16 on the second main piston 5.

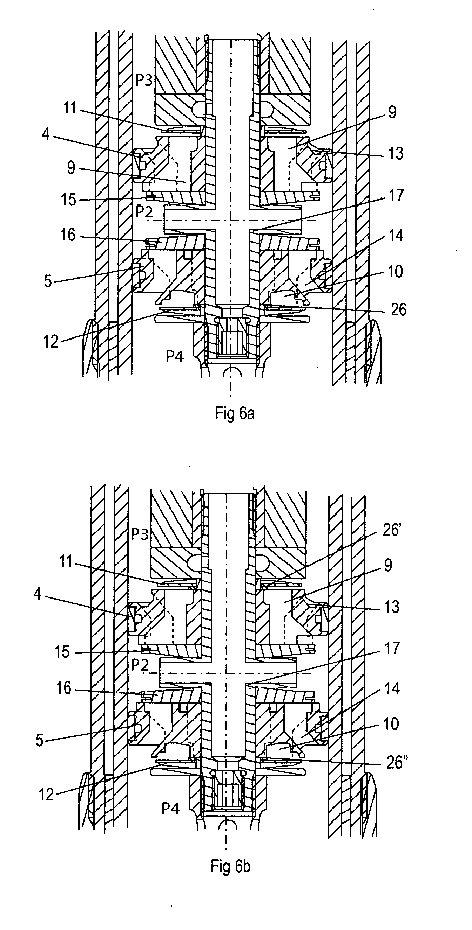

In figure 6a, a second embodiment of the invention is shown. Here a distance is created by a spacer 26 between the second main piston 5 and the second check valve 12. This enables a flow between the second damping chamber C2 and the intermediate chamber 8 during the first part of the compression stroke R1. The first check valve 11 thus bears against the first main piston 4 during the whole return stroke R2.

In figure 6b, a third embodiment of the invention is shown and here a first distance is created by a first spacer 26' between the first main piston 4 and the first check valve 11 and a second distance is created by a second spacer 26" between the second main piston 5 and the second check valve 12. The first and second distances 26', 26" can have the same thickness or different thicknesses so as to produce different damping properties in the different stroke directions. Of course, the spacers can also be joined to the pistons or to the check valves.

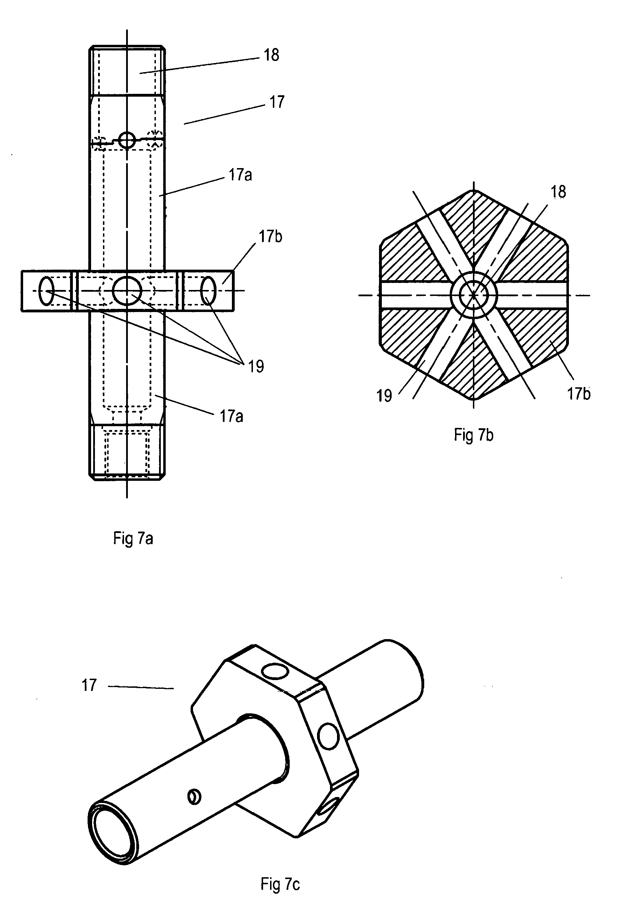

The two main pistons 4, 5 are disposed on an intermediate part 17 which is screwed onto the first end 3a of the piston rod. The intermediate part 17 shown in figures 7a-7c is produced in one piece, but can be said to be made up of a cylindrical part 17a, which is an axial extension of the piston rod 3, and a supporting part 17b extending radially therefrom. The cylindrical part 17a also has a concentric hole 18, which connects to the cavity of the piston rod. The main pistons 4, 5 are arranged concentrically around the cylindrical part 17a on either side of the radially projecting supporting part 17b.

In the radially extending supporting part 17b there are disposed substantially radially extending third ducts 19, which lead from the concentric hole 18 disposed in the cylindrical part 17a to the interspace 8. The number of ducts 20 is determined by the size of the extent of the intermediate part 17 in the lateral direction, i.e. by the amount of material to be machined. Preferably, the number of ducts is 6-8. Despite the fact that the intermediate part 17 is perforated by a plurality of ducts 19, the rigidity of the part is maintained, since the whole of the intermediate part 17 is produced from one piece.

The main pistons 4, 5 are clamped to the intermediate part 17 and the piston rod 3 by a locking member 20, which is screwed onto the cylindrical part 17a of the intermediate part. In order to create a play-free fitting of the main pistons 4, 5 and prevent unwanted vibrations when the flow limiter opens, a resilient member 21, preferably a corrugated washer, an elastic 0-ring or the like is provided between the first main piston 4 and the piston 3, as well as between the main piston 5 and the locking member 20. The locking member 20 can naturally be replaced by a simple nut 20_{PA}, or the like.

In this embodiment of the invention, the locking member 20 has the form of a piston rod extender on which an additional damping piston 22 is mounted, see fig. 2a. This additional damping piston 22 is intended to create a gentle braking of the damping motion in the end position of a stroke in the first motional direction R1. The additional damping piston 22 has a radial extent which is less than the radial extent of the main pistons 4, 5 and is intended to slide into a limit space 23, tailored to the damping piston 22, in the form of a cup disposed in the damping cylinder part 2.

The invention is not limited to the embodiment shown, but can also be modified within the scope of the appended claims.

## Claims

1. A shock absorber (1) comprising a damping cylinder (2) filled with a damping medium and divided into a first and a second damping chamber (C1, C2) by a main piston assembly made up of a first (4) and a second main piston (5) having continuous ducts (9, 10; 13, 14) which are delimited in a direction of flow by first and second flow limiters (11, 12; 15, 16), which first flow limiters comprise a first (11) and a second check valve (12), wherein the first (4) and the second (5) main piston are disposed on a piston rod (3) having an axially extending and continuous cavity (7), through which damping medium is able to flow between a pressurized chamber (6a) of a pressurization reservoir (6) and the respective damping chamber (C1/C2) via an interspace (8), delimited by the first and the second main piston (4, 5), in the main piston assembly, wherein a first damping medium flow, generated by a compression stroke (R1), is adapted to flow the from the interspace (8) to the first damping chamber (C1) through at least a first pressurization duct (9), delimited by the first check valve (11), in the first main piston (4), and wherein a second damping medium flow, generated by a return stroke (R2), is adapted to flow from the interspace (8) to the second damping chamber (C2) through at least a second pressurization duct (10), delimited by the second check valve (12), in the second main piston (5), **characterized in that** at least one of the first check valve (11) and the second check valve (12) is disposed on the respective main piston (4, 5) in such a manner that it, in the initial part of the return stroke (R2) and/or the compression stroke (R1), enables a flow between the first damping chamber (C1) and the interspace (8) during the first part of the return stroke (R2) and/or in such a manner that it enables a flow between the second damping chamber (C2) and the interspace (8) during the first part of the compression stroke (R1).

2. The shock absorber (1) as claimed in claim 1, **characterized in that** the first check valve (11) is arranged at a distance from the first surface (4a) of the first main piston (4) such that, in the initial part of the return stroke (R2), a damping medium flow (Q_{reb}) is able to flow in a gap between the first check valve (11) and the first main piston (4).

3. The shock absorber (1) as claimed in claim 1 or 2, **characterized in that** the second check valve (12) is arranged at a distance from the first surface (5a) of the second main piston (5) such that, in the initial part of the compression stroke (R1), a damping medium flow (Q_{reb}) is able to flow in a gap between the second check valve (12) and the second main piston (5).

4. The shock absorber (1) as claimed in claim 2 or 3, **characterized in that** the first check valve (11) and/or the second check valve (12) is/are arranged to bear, at its inner edge portion, against a spacer (26) disposed on the first surface (4a, 5a) of the first or second main piston.

5. The shock absorber (1) as claimed in claim 4, **characterized in that** the spacer (26) has a thickness of between 0.1 and 0.6 mm.

6. The shock absorber (1) as claimed in claim 4 or 5, **characterized in that** the spacer (26) has the form of an annular sealing washer.

7. The shock absorber (1) as claimed in claim 4 or 5, **characterized in that** the spacer (26) is created by being formed as an axially projecting part which extends from the first surface (4a, 5a) of one or both of the main pistons.

8. The shock absorber (1) as claimed in claim 4 or 5, **characterized in that** the spacer (26) is created by the first and/or the second check valve (11, 12) being formed with an axially projecting part which serves to support it on the first surface (4a, 5a) of the first or the second main piston (4, 5).

9. The shock absorber (1) as claimed in any one of the preceding claims, **characterized in that** at a certain flow (Q_{reb}), when the pressure difference across the first or the second check valve (11, 12) has reached a predetermined value determined by the piston velocity of the main piston assembly, said check valve (11, 12) is deformed such that its outer edge portion (11a, 12a) is moved in parallel relative to its inner edge portion so as to bear in a sealing manner against the first surface (4a, 5a) of, respectively, the first and the second main piston (4, 5).

10. The shock absorber (1) as claimed in claim 9, **characterized in that** the flow pathway between the first and/or the second check valve (11, 12) and, respectively, the first and the second main piston (4, 5) closes at a flow corresponding to a main piston assembly velocity not exceeding 1 m/s.

11. The shock absorber (1) as claimed in claim 2, **characterized in that** the second check valve (12) is arranged in such a manner that is stops the flow between the second damping chamber (C2) and the interspace (8) during the whole compression stroke (R1) and that it is rigid and inflexible in the axial direction and has a certain extent in the lateral direction

12. The shock absorber (1) as claimed in claim 3, **characterized in that** first check valve (11) is arranged in such a manner that is stops the flow between the first damping chamber (C1) and the interspace (8) during the whole return stroke (R2) and that it is rigid and inflexible in the axial direction and has a certain extent in the lateral direction.

## Patentansprüche

1. Stoßdämpfer (1), einen Dämpfungszylinder (2) umfassend, der mit einem Dämpfungsmedium gefüllt und in eine erste und eine zweite Dämpfungskammer (C1, C2) geteilt ist, durch eine Hauptkolbenanordnung, die aus einem ersten (4) und einem zweiten Hauptkolben (5) besteht, welche durchgehende Kanäle (9, 10; 13, 14) aufweisen, die in Strömungsrichtung durch erste und zweite Strömungsbegrenzer (11, 12; 15, 16) begrenzt sind, wobei die ersten Strömungsbegrenzer ein erstes (11) und ein zweites Sperrventil (12) umfassen, wobei der erste (4) und der zweite (5) Hauptkolben an einer Kolbenstange (3) angeordnet sind, die einen sich axial erstreckenden und durchgehenden Hohlraum (7) aufweist, durch den Dämpfungsmedium zwischen einer unter Druck stehenden Kammer (6a) eines Druckbehälters (6) und der entsprechenden Dämpfungskammer (C1/C2) über einen Zwischenraum (8) strömen kann, der durch den ersten und den zweiten Hauptkolben (4, 5) in der Hauptkolbenanordnung begrenzt ist, wobei ein erster Strom des Dämpfungsmediums, der durch einen Kompressionshub (R1) erzeugt wird, dafür eingerichtet ist, vom Zwischenraum (8) durch mindestens einen Druckkanal (9), der durch das erste Sperrventil (11) im ersten Hauptkolben (4) begrenzt ist, zur ersten Dämpfungskammer (C1) zu strömen, und wobei ein zweiter Strom des Dämpfungsmediums, der durch einen Rückhub (R2) erzeugt wird, dafür eingerichtet ist, vom Zwischenraum (8) durch mindestens einen zweiten Druckkanal (10), der durch das zweite Sperrventil (12) im zweiten Hauptkolben (5) begrenzt ist, zur zweiten Dämpfungskammer (C2) zu strömen, **dadurch gekennzeichnet, dass** das erste Sperrventil (11) und/oder das zweite Sperrventil (12) derart am entsprechenden Hauptkolben (4, 5) angeordnet ist/sind, dass es/sie im Anfangsstück des Rückhubs (R2) und/oder des Kompressionshubs (R1) während des ersten Stücks des Rückhubs (R2) einen Strom zwischen der ersten Dämpfungskammer (C1) und dem Zwischenraum (8) ermöglicht/ermöglichen, und/oder derart, dass es/sie während des ersten Stücks des Kompressionshubs (R1) einen Strom zwischen der zweiten Dämpfungskammer (C2) und dem Zwischenraum (8) ermöglicht/ermöglichen.

2. Stoßdämpfer (1) nach Anspruch 1, **dadurch gekennzeichnet, dass** das erste Sperrventil (11) derart in einem Abstand zur ersten Oberfläche (4a) des ersten Hauptkolbens (4) angeordnet ist, dass im Anfangsstück des Rückhubs (R2) ein Dämpfungsmediumstrom (Q_{reb}) in einem Spalt zwischen dem ersten Sperrventil (11) und dem ersten Hauptkolben (4) strömen kann.

3. Stoßdämpfer (1) nach Anspruch 1 oder 2, **dadurch gekennzeichnet, dass** das zweite Sperrventil (12) derart in einem Abstand zur ersten Oberfläche (5a) des zweiten Hauptkolbens (5) angeordnet ist, dass im Anfangsstück des Kompressionshubs (R1) ein Dämpfungsmediumstrom (Q_{reb}) in einem Spalt zwischen dem zweiten Sperrventil (12) und dem zweiten Hauptkolben (5) strömen kann.

4. Stoßdämpfer (1) nach Anspruch 2 oder 3, **dadurch gekennzeichnet, dass** das erste Sperrventil (11) und/oder das zweite Sperrventil (12) dafür angeordnet ist/sind, mit seinem/ihrem inneren Randabschnitt an einem Abstandshalter (26) anzuliegen, der an der ersten Oberfläche (4a, 5a) des ersten beziehungsweise zweiten Hauptkolbens angeordnet ist.

5. Stoßdämpfer (1) nach Anspruch 4, **dadurch gekennzeichnet, dass** der Abstandshalter (26) eine Dicke zwischen 0,1 und 0,6 mm aufweist.

6. Stoßdämpfer (1) nach Anspruch 4 oder 5, **dadurch gekennzeichnet, dass** der Abstandshalter (26) die Form einer ringförmigen Dichtungsscheibe aufweist.

7. Stoßdämpfer (1) nach Anspruch 4 oder 5, **dadurch gekennzeichnet, dass** der Abstandshalter (26) derart gestaltet ist, dass er als ein axial hervorstehendes Teil gebildet ist, das sich aus der ersten Oberfläche (4a, 5a) eines oder beider Hauptkolben erstreckt.

8. Stoßdämpfer (1) nach Anspruch 4 oder 5, **dadurch gekennzeichnet, dass** der Abstandshalter (26) vom ersten und/oder zweiten Sperrventil (11, 12) gebildet ist, das/die mit einem axial hervorstehenden Teil gebildet ist/sind, das dazu dient, es/sie auf der ersten Oberfläche (4a, 5a) des ersten beziehungsweise zweiten Hauptkolbens (4, 5) abzustützen.

9. Stoßdämpfer (1) nach einem der vorhergehenden Ansprüche, **dadurch gekennzeichnet, dass** das Sperrventil (11, 12) bei einem bestimmten Strom (Q_{reb}), bei dem die Druckdifferenz über das erste oder das zweite Sperrventil (11, 12) einen festgelegten Wert erreicht hat, der durch die Kolbengeschwindigkeit der Hauptkolbenanordnung bestimmt ist, derart verformt wird, dass sein Außenrandabschnitt (11a, 12a) im Verhältnis zu seinem Innenrandabschnitt parallel bewegt wird, so dass er in einer abdichtenden Weise an der ersten Oberfläche (4a, 5a) des ersten beziehungsweise zweiten Hauptkolbens (4, 5) anliegt.

10. Stoßdämpfer (1) nach Anspruch 9, **dadurch gekennzeichnet, dass** sich der Strömungsdurchlassweg zwischen dem ersten und/oder dem zweiten Sperrventil (11, 12) und am ersten beziehungsweise zweiten Hauptkolben (4, 5) bei einen Strom schließt, der einer Hauptkolbenanordnungs-Geschwindigkeit von nicht mehr als 1 m/s entspricht.

11. Stoßdämpfer (1) nach Anspruch 2, **dadurch gekennzeichnet, dass** das zweite das zweite Sperrventil (12) derart angeordnet ist, dass es den Strom zwischen der zweiten Dämpfungskammer (C2) und dem Zwischenraum (8) während des gesamten Kompressionshubs (R1) unterbricht und dass es in Axialrichtung starr und nicht biegbar ist, aber bis zu einem gewissen Umfang in seitlicher Richtung.

12. Stoßdämpfer (1) nach Anspruch 3, **dadurch gekennzeichnet, dass** das erste Sperrventil (11) derart angeordnet ist, dass es den Strom zwischen der ersten Dämpfungskammer (C1) und dem Zwischenraum (8) während des gesamten Rückhubs (R2) unterbricht und dass es in Axialrichtung starr und nicht biegbar ist, aber bis zu einem gewissen Umfang in seitlicher Richtung.

## Revendications

1. Absorbeur de choc (1) comprenant un cylindre d'amortissement (2) rempli d'un fluide d'amortissement et divisé en une première et une deuxième chambre d'amortissement (C1, C2) par un ensemble à pistons principal composé d'un premier (4) et d'un second piston principal (5) ayant des conduits continus (9, 10; 13, 14) qui sont délimités dans un sens du débit par les premier et second limiteurs de débit (11, 12; 15, 16), lequel premier limiteur de débit comprend un premier (11) et un deuxième clapet anti-retour (12), dans lequel les premier (4) et second (5) pistons principaux sont disposés sur une première tige de piston (3) ayant une cavité continue et se prolongeant axialement (7), par laquelle le fluide d'amortissement est apte à s'écouler entre une chambre pressurisée (6a) d'un réservoir de pressurisation (6) et la chambre d'amortissement respective (C1/C2) par un intervalle (8), délimité par les premier et second pistons principaux (4, 5), dans l'ensemble à piston principal, dans lequel un premier débit du fluide d'amortissement, généré par une course de compression (R1), est apte à s'écouler de l'intervalle (8) vers la première chambre d'amortissement (C1) par au moins un premier conduit de pressurisation (9), délimité par le premier clapet anti-retour (11), dans le premier piston principal (4), et dans lequel un second débit du fluide d'amortissement, généré par une course de retour (R2), est apte à s'écouler de l'intervalle (8) vers la seconde chambre d'amortissement (C2) par au moins un second conduit de pressurisation (10), délimité par le second clapet anti-retour (12), dans le second piston principal (5), **caractérisé en ce que** le au moins un du premier clapet anti-retour (11) et du second clapet anti-retour (12) est disposé sur le piston principal respectif (4, 5) de sorte qu'il permet, dans la partie initiale de la course de retour (R2) et/ou de la course de compression (R1), un débit entre la première chambre d'amortissement (C1) et l'intervalle (8) au cours de la première partie de la course de retour (R2) et/ou de sorte qu'il permet un débit entre la seconde chambre d'amortissement (C2) et l'intervalle (8) au cours de la première partie de la course de compression (R1).

2. Absorbeur de choc (1) tel que revendiqué à la revendication 1, **caractérisé en ce que** le premier clapet anti-retour (11) est placé à une distance de la première surface (4a) du premier piston principal (4) de sorte que, dans la partie initiale de la course de retour (R2), un débit du fluide d'amortissement (Q_{reb}) est apte à s'écouler dans un vide entre le premier clapet anti-retour (11) et le premier piston principal (4).

3. Absorbeur de choc (1) tel que revendiqué à la revendication 1 ou 2, **caractérisé en ce que** le second clapet anti-retour (12) est placé à une distance de la première surface (5a) du second piston principal (5) de sorte que, dans la partie initiale de la course de compression (R1), un débit du fluide d'amortissement (Q_{reb}) est apte à s'écouler dans un vide entre le second clapet anti-retour (12) et le second piston principal (4).

4. Absorbeur de choc (1) tel que revendiqué à la revendication 2 ou 3, **caractérisé en ce que** le premier clapet anti-retour (11) et/ou le second clapet anti-retour (12) est/sont placé(s) pour toucher, sur la partie de bord intérieur, un espaceur (26) placée sur la première surface (4a, 5a) du premier ou du second piston principal.

5. Absorbeur de choc (1) tel que revendiqué à la revendication 4, **caractérisé en ce que** l'espaceur (26) a une épaisseur qui se situe entre 0,1 et 0,6 mm.

6. Absorbeur de choc (1) tel que revendiqué à la revendication 4 ou 5, **caractérisé en ce que** l'espaceur (26) a la forme d'une rondelle d'étanchéité annulaire.

7. Absorbeur de choc (1) tel que revendiqué à la revendication 4 ou 5, **caractérisé en ce que** l'espaceur (26) est créé en étant formé comme une partie se projetant axialement qui s'étend de la première surface (4a, 5a) vers un ou plusieurs des pistons principaux.

8. Absorbeur de choc (1) tel que revendiqué à la revendication 4 ou 5, **caractérisé en ce que** l'espaceur (26) est créé par le premier et/ou le second clapet anti-retour (11, 12) étant formé avec une partie se projetant axialement qui sert à le soutenir sur la première surface (4a, 5a) du premier ou du second piston (4, 5).

9. Absorbeur de choc (1) tel que revendiqué dans l'une quelconque des revendications précédentes, **caractérisé en ce qu'**un certain débit (Q_{reb}) quand la différence de pression sur le premier ou le second clapet anti-retour (11, 12) a atteint une valeur prédéterminé déterminée par la vélocité du piston de l'ensemble à piston principal, ledit clapet anti-retour (11, 12) est déformé de sorte que sa partie de bord extérieur (11a, 12a) est déplacée en parallèle par rapport à sa partie de bord intérieur de manière à toucher d'une manière étanche la première surface (4a, 5a) de, respectivement, le premier et le second piston principal (4, 5).

10. Absorbeur de choc (1) tel que revendiqué à la revendication 9, **caractérisé en ce que** le passage du débit entre le premier et/ou le second clapet anti-retour (11, 12) et, respectivement, le premier et le second piston principal (4, 5) se ferme à un débit correspondant à la vélocité de l'ensemble du piston principal ne dépassant pas 1m/s.

11. Absorbeur de choc (1) tel que revendiqué à la revendication 2, **caractérisé en ce que** l'espaceur le second clapet anti-retour (12) est disposé de manière à stopper le débit entre la seconde chambre d'amortissement (C2) et l'intervalle (8) pendant toute la durée de la course de compression (R1) et **en ce qu'**il est rigide et non flexible dans le sens axial et qu'il a une certaine extension dans le sens latéral.

12. Absorbeur de choc (1) tel que revendiqué à la revendication 3, **caractérisé en ce que** le premier clapet anti-retour (11) est disposé de manière à stopper le débit entre la première chambre d'amortissement (C1) et l'intervalle (8) pendant toute la durée de la course de retour (R2) et **en ce qu'**il est rigide et non flexible dans le sens axial et qu'il a une certaine extension dans le sens latéral.
